# EUROPEAN PATENT SPECIFICATION

(11) **EP 4 390 851 B1**
(45) Date of publication and mention of the grant of the patent: **22.04.2026**
(21) Application number: 22874818.2
(22) Date of filing: 26.09.2022
(51) Int. Cl.: G06T 11/60

(54) **IMAGE EDITING METHOD AND APPARATUS**
BILDBEARBEITUNGSVERFAHREN UND -VORRICHTUNG
PROCÉDÉ ET APPAREIL D'ÉDITION D'IMAGE

(30) Priority: 30.09.2021 CN 202111165882
(43) Date of publication of application: 26.06.2024
(73) Proprietor: Beijing Zitiao Network Technology Co., Ltd., Beijing 100190 (CN)
(72) Inventor: ZHANG, Xinghua, Beijing 100086 (CN); CAI, Zhirui, Beijing 100086 (CN)
(74) Representative: Marks & Clerk LLP
(86) International application number: PCT/CN2022/121192
(87) International publication number: WO 2023/051432

(56) References cited:
- EP-B1- 0 850 462
- WO-A1-2021/010974
- CN-A- 109 034 150
- CN-A- 109 948 103
- CN-A- 109 948 103
- CN-A- 113 157 665
- CN-A- 113 379 865
- CN-A- 113 672 122
- US-A1- 2007 003 106
- US-B1- 10 757 346
- FAVREAU JEAN-DOMINIQUE ET AL: "Photo2clipart", ACM TRANSACTIONS ON GRAPHICS, ACM, NY, US, vol. 36, no. 6, 20 November 2017 (2017-11-20), pages 1 - 11, XP058473837, ISSN: 0730-0301, DOI: 10.1145/3130800.3130888

## Description

### TECHNICAL FIELD

The present application relates to the technical field of image processing, and in particular, to an image editing method and apparatus.

### BACKGROUND

When editing an image, there can often be a need for editing a plurality of objects in a same image. For example, when editing a group photo, there can often be a need for differently editing different human faces in the photo.

A multi-object editing method in a related technique is to divide an original image into a plurality of regions by region where an object needing to be edited is located in the original image, and then to edit the region corresponding to each object needing to be edited one by one on the original image. However, since such a multi-object editing method in the related technique is directed to editing on the original image, re-editing of a certain object needs to be done on the original image, and global rendering is performed on the editing results of other edited objects. Therefore, such a multi-object editing method in the related technique may have enormous performance overhead when re-editing an object in an image. For example, objects needing to be edited in an original image include a first object and a second object. A user may firstly edit the first object on the original image to generate a first intermediate image and then edit the second object on the first intermediate image to generate a second intermediate image. When the user is dissatisfied with the editing result of the first object in the second intermediate image and wants to re-edit the first object, since no intermediate image having only the editing result of the second object is generated during editing, the user needs to re-edit the first object on the original image to generate a third intermediate image, and to render the editing result of the second object on the third intermediate image to obtain a final target image. As objects needing to be edited in an image increase, objects requiring editing result rendering when re-editing an object in the image will increase accordingly, resulting in constantly increased performance overhead when re-editing the object in the image.

US 10757346, discloses using at least one hardware processor to: receive a first video depicting a first scene comprising one or more objects and a background; identify the one or more objects in the first video; generating a first video layer by extracting the identified one or more objects from the background of the first video; receive a second video layer depicting a second scene; and merge the first video layer and second video layer to generate a composite scene, wherein the one or more objects of the first video layer overlaid on the second scene such that the one or more objects appear as part of the second scene.

### SUMMARY

In view of the above problem, the present application provides an image editing method and apparatus that are intended to solve the problem of enormous performance overhead when re-editing an object in an image during multi-object editing.

To achieve the above objective, embodiments of the present application provide the following technical solutions.

In a first aspect, an embodiment of the application provides an image editing method, including:
obtaining an original image, wherein the original image includes a first editing object and a second editing object, and the first editing object and the second editing object are located in different image regions of the original image;
rendering the first editing object and the second editing object to different layers, respectively, to generate a first original layer corresponding to the first editing object and a second original layer corresponding to the second editing object;
rendering an editing result of the first editing object under a first editing operation based on the first original layer to generate a first editing layer corresponding to the first editing object in response to the first editing operation for the first editing object, and rendering an editing result of the second editing object under a second editing operation based on the second original layer to generate a second editing layer corresponding to the second editing object in response to the second editing operation for the second editing object; and
generating, based on the first editing layer and the second editing layer, a target image as an editing result of the original image.

In some embodiments, the rendering the first editing object and the second editing object to different layers, respectively, to generate a first original layer corresponding to the first editing object and a second original layer corresponding to the second editing object includes:
creating layers corresponding to the first editing object and the second editing object, respectively;
separately extracting image data corresponding to the first editing object and image data corresponding to the second editing object from the original image; and
rendering the layer corresponding to the first editing object based on the image data corresponding to the first editing object to generate the first original layer corresponding to the first editing object, and rendering the layer corresponding to the second editing object based on the image data corresponding to the second editing object to generate the second original layer corresponding to the second editing object.

In some embodiments, the separately extracting image data corresponding to the first editing object and image data corresponding to the second editing object from the original image includes:
determining an outline of the first editing object and an outline of the second editing object from the original image; and
extracting image data within the outline of the first editing object to obtain the image data corresponding to the first editing object, and extracting image data within the outline of the second editing object to obtain the image data corresponding to the second editing object.

In some embodiments, the separately extracting image data corresponding to the first editing object and image data corresponding to the second editing object from the original image includes:
determining an outline of the first editing object and an outline of the second editing object from the original image;
determining a first image data extraction region corresponding to the first editing object and a second image data extraction region corresponding to the second editing object based on the outline of the first editing object and the outline of the second editing object, respectively, wherein the outline of the first editing object is located in the first image data extraction region, and the outline of the second editing object is located in the second image data extraction region; and
extracting image data within the first image data extraction region to obtain the image data corresponding to the first editing object, and extracting image data within the second image data extraction region to obtain the image data corresponding to the second editing object.

In some embodiments, the image editing method further includes:
smoothing an edge of the first editing object in the first original layer and/or an edge of the second editing object in the second original layer based on a preset smoothing algorithm.

In some embodiments, the generating, based on the first editing layer and the second editing layer, a target image includes:
setting a transparency of an edge region of the first editing layer and an edge region of the second editing layer to a preset transparency, wherein the edge region is a region other than a region corresponding to an editing object in an editing layer; and
overlaying the first editing layer and the second editing layer on the original image to generate the target image.

In some embodiments, the overlaying the first editing layer and the second editing layer on the original image to generate the target image includes:
determining whether a region corresponding to the editing object of the first editing layer overlaps a region corresponding to the editing object of the second editing layer; and
in response to the region corresponding to the editing object of the first editing layer not overlapping the region corresponding to the editing object of the second editing layer, overlaying the first editing layer and the second editing layer on the original image in any order to generate the target image.

In some embodiments, if the region corresponding to the editing object of the first editing layer overlaps the region corresponding to the editing object of the second editing layer, obtaining a depth of the first editing object and a depth of the second editing object; and
overlaying the first editing layer and the second editing layer on the original image in a depth descending order to generate the target image.

In some embodiments, before the setting a transparency of an edge region of the first editing layer and an edge region of the second editing layer to a preset transparency, the image editing method further includes:
determining whether the first editing layer and the second editing layer include a shrank region, wherein the shrank region is a region that changes from the region corresponding to the editing object to the edge region after editing; and
in response to the first editing layer and the second editing layer comprising the shrank region, performing edge transitional filling on the shrank region, and setting the shrank region to the region corresponding to the editing object.

In a second aspect, an embodiment of the application provides an image editing apparatus including an obtaining unit, a generation unit, an editing unit and a processing unit.

The obtaining unit is configured to obtain an original image, wherein the original image includes a first editing object and a second editing object, and the first editing object and the second editing object are located in different image regions of the original image;
The generation unit is configured to render the first editing object and the second editing object to different layers, respectively, to generate a first original layer corresponding to the first editing object and a second original layer corresponding to the second editing object;
The editing unit is configured to render an editing result of the first editing object under a first editing operation based on the first original layer to generate a first editing layer corresponding to the first editing object, in response to the first editing operation for the first editing object, and render an editing result of the second editing object under a second editing operation based on the second original layer to generate a second editing layer corresponding to the second editing object in response to the second editing operation for the second editing object; and
The processing unit is configured to generate, based on the first editing layer and the second editing layer, a target image as an editing result of the original image.

In a third aspect, an embodiment of the application provides an electronic device, including a memory and a processor, wherein the memory is configured to store a computer program; and the processor is configured to, when invoking the computer program, causes the electronic device to implement the image editing method described in the first aspect or any one of the embodiments of the first aspect.

In a fourth aspect, an embodiment of the application provides a computer-readable storage medium storing a computer program, wherein the computer-readable storage medium, when executed by a computing device, causes the computing device to implement the image editing method described in the first aspect or any one of the embodiments of the first aspect.

In a fifth aspect, an embodiment of the application provides a computer program product, wherein the computer program product, when executing on a computer, causes the computer to implement the image editing method described in the first aspect or any one of the embodiments of the first aspect.

The image editing method provided in the embodiments of the present application includes: firstly obtaining an original image including a first editing object and a second editing object; then, rendering the first editing object and the second editing object to different layers, respectively, to generate a first original layer and a second original layer; subsequently, in response to a first editing operation for the first editing object, rendering an editing result of the first editing object under the first editing operation based on the first original layer to generate a first editing layer corresponding to the first editing object, and in response to a second editing operation for the second editing object, rendering an editing result of the second editing object under the second editing operation based on the second original layer to generate a second editing layer corresponding to the second editing object; and finally, generating, based on the first editing layer and the second editing layer, a target image as an editing result of the original image. Since the first original layer and the second original layer in the embodiments of the present application, and the first editing operation is performed on the first original layer while the second editing operation is performed on the second original layer, when the first editing object or the second editing object in the image is re-edited, only the first original layer or the second original layer needs to be re-edited and rendered without requiring re-rendering on all the editing objects in the original image. Therefore, the embodiments of the present application can solve the problem of enormous performance overhead when re-editing an object in an image during multi-object editing.

### BRIEF DESCRIPTION OF THE DRAWINGS

The accompanying drawings, which are incorporated in and constitute a part of this description, illustrate the embodiments of the present application and together with the description, serve to explain the principles of the present application.

To describe the technical solutions in the embodiments of the present application or in the prior art more clearly, the accompanying drawings required in the description of the embodiments or the prior art will be described briefly below. Apparently, other accompanying drawings can also be derived from these drawings by those ordinarily skilled in the art without creative efforts.
FIG. 1 is a first flowchart of an image editing method provided in an embodiment of the present application;
FIG. 2 is a first scene interface diagram of an image editing method provided in an embodiment of the present application;
FIG. 3 is a second scene interface diagram of an image editing method provided in an embodiment of the present application;
FIG. 4 is a schematic diagram of an editing layer in an image editing method provided in an embodiment of the present application;
FIG. 5 is a second flowchart of an image editing method provided in an embodiment of the present application;
FIG. 6 is a first schematic diagram of an editing object provided in an embodiment of the present application;
FIG. 7 is a second schematic diagram of an editing object provided in an embodiment of the present application;
FIG. 8. is a schematic diagram of a shrank region provided in an embodiment of the present application;
FIG. 9 is a schematic diagram of an edge region provided in an embodiment of the present application;
FIG. 10 is a schematic diagram of an image editing apparatus provided in an embodiment of the present application; and
FIG. 11 is a schematic diagram of a hardware structure of an electronic device provided in an embodiment of the present application.

### DETAILED DESCRIPTION

To provide a clearer understanding of the objective, features, and advantages of the present application, the solutions in the present application will be further described below. It needs to noted that the embodiments of the present application and the features in the embodiments can be combined with one another without conflict.

Many specific details are described in the following descriptions to help fully understand the present application. However, the present application may also be implemented in other manners different from those described herein. Apparently, the embodiments in this description are merely some rather than all of the embodiments of the present application.

In the embodiments of the present application, the word such as "exemplary" or "for example" means "serving as an example, instance or illustration". Any embodiment or design solution described herein as "exemplary" or "for example" in the embodiments of the present application should not be construed as being more preferred or advantageous over other embodiments or design solutions. Exactly, the words such as "exemplary" or "for example" are intended to present related concepts specifically. Moreover, in the descriptions of the embodiments of the present application, unless otherwise specified, "a plurality of" means two or more.

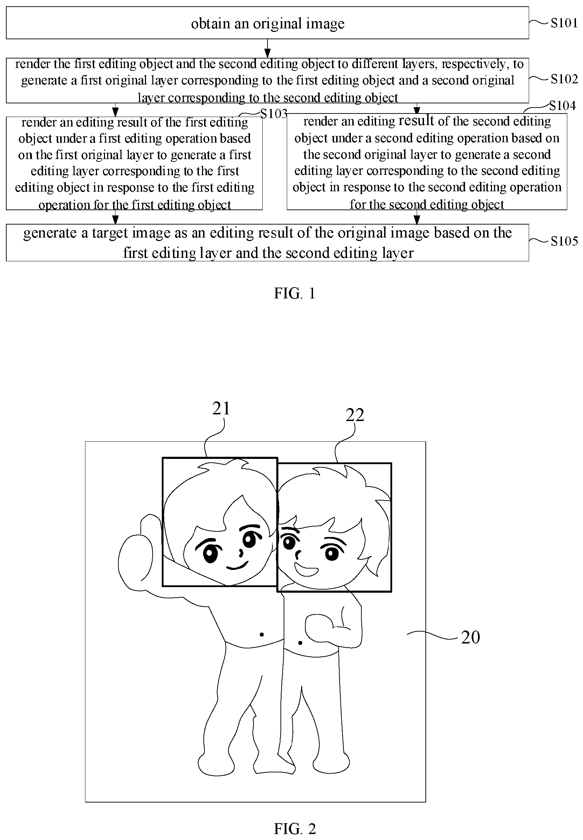

An embodiment of the present application provides an image editing method. With reference to FIG. 1, the image editing method includes the following steps.

S101, an original image is obtained.

The original image includes a first editing object and a second editing object, where the first editing object and the second editing object are located in different image regions of the original image.

It needs to be noted that the editing object (the first editing object and the second editing object) in the embodiment of the present application may be any element in the original image. For example, the editing object may be a human face, a tree, a lawn, sky, etc., which will not be limited in the embodiment of the present application.

The editing object in the embodiment of the present application may be automatically obtained by an image recognition algorithm. Exemplarily, with reference to FIG. 2, a first human face 21 and a second human face 22 in the original image 20 may be automatically recognized based on a human face recognition algorithm, and the recognized first human face 21 and second human face 22 are determined as the editing objects.

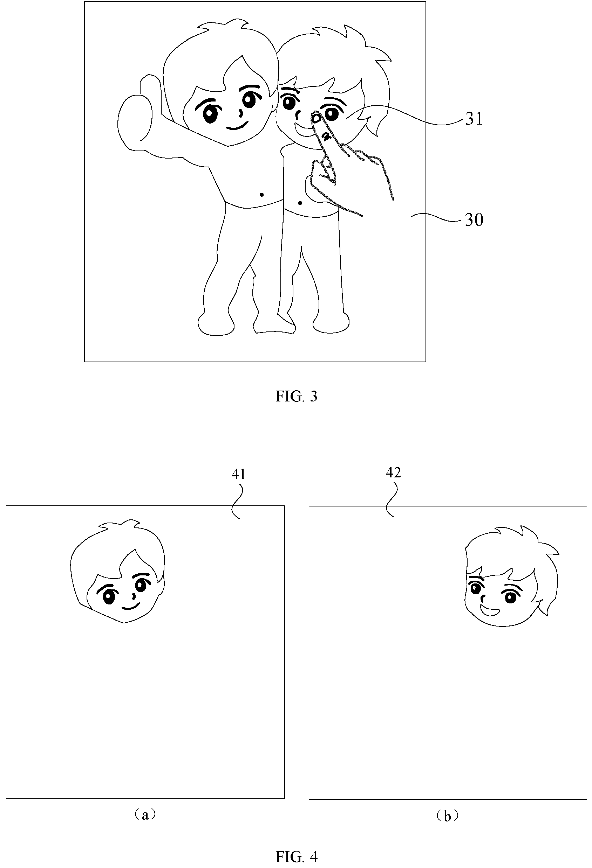

The editing object in the embodiment of the present application may also be selected by a user according to an editing requirement. Exemplarily, with reference to FIG. 3, when the original image 30 is displayed and a selection operation or an editing operation for a human face 31 to be edited is received from a user, the human face 31 to be edited is determined as the editing object in response to the selection operation or the editing operation of the user.

S102, the first editing object and the second editing object are rendered to different layers, respectively, to generate a first original layer corresponding to the first editing object and a second original layer corresponding to the second editing object.

In some embodiments, sizes and shapes of the first original layer and the second original layer may be the same as a size and a shape of the original image.

Exemplarily, with reference to FIG. 4, as shown by the editing objects in the example corresponding to FIG. 2, an original layer corresponding to the first human face 21 may be an original layer 41 shown in FIG. 4 (a), and an original layer corresponding to the second human face 22 may be an original layer 42 shown in FIG. 4 (b).

S103, an editing result of the first editing object under a first editing operation is rendered based on the first original layer to generate a first editing layer corresponding to the first editing object in response to the first editing operation for the first editing object.

S104, an editing result of the second editing object under a second editing operation is rendered based on the second original layer to generate a second editing layer corresponding to the second editing object in response to the second editing operation for the second editing object.

It needs to be noted that the embodiments of the present application are not limited to the above order of preforming steps S103 and S104. Step S103 may be performed first and then step S104 may performed; or, step S104 is performed first and then step S103 is performed; or, steps S103 and S104 are performed synchronously.

Further, each of the first editing operation and the second editing operation may be input by the user or determined automatically based on a beauty algorithm, a special effect addition algorithm, etc.

In some implementations, the first original layer and the second original layer may be displayed on the original image in an overlapping manner. When the user edits a certain original layer, the original layer is brought to front. Thus, the user, when editing a plurality of editing objects, will not perceive the existence of the original layers corresponding to the editing objects. In this way, the editing experience of the user can be improved.

S105, a target image is determined as an editing result of the original image based on the first editing layer and the second editing layer.

The image editing method provided in the embodiment of the present application includes: firstly obtaining an original image including a first editing object and a second editing object; then, rendering the first editing object and the second editing object to different layers, respectively, to generate a first original layer and a second original layer; subsequently, rendering an editing result of the first editing object under a first editing operation based on the first original layer to generate a first editing layer corresponding to the first editing object in response to the first editing operation for the first editing object,, and rendering an editing result of the second editing object under a second editing operation based on the second original layer to generate a second editing layer corresponding to the second editing object in response to the second editing operation for the second editing object; and finally, generating, based on the first editing layer and the second editing layer, a target image as an editing result of the original image. Since the first original layer and the second original layer in the embodiments of the present application, and the first editing operation is performed on the first original layer while the second editing operation is performed on the second original layer, when the first editing object or the second editing object in the image is re-edited, only the first original layer or the second original layer needs to be re-edited and rendered without requiring re-rendering on all the editing objects in the original image. Therefore, the embodiments of the present application can solve the problem of enormous performance overhead when re-editing an object in an image during multi-object editing.

It needs to be noted that the foregoing embodiment is described by taking for example editing two editing objects (the first editing object and the second editing object) in the original image, the embodiments of the present application are not limited to editing only two editing objects in the original image. On the basis of the foregoing embodiment, the image editing method provided in the embodiments of the present application is also capable of editing other number of editing objects in the original image. When editing other number of editing objects in the original image, operations performed on the editing objects are similar to the operations performed on the first editing object and the second editing object in the foregoing embodiment, which will not be described here redundantly.

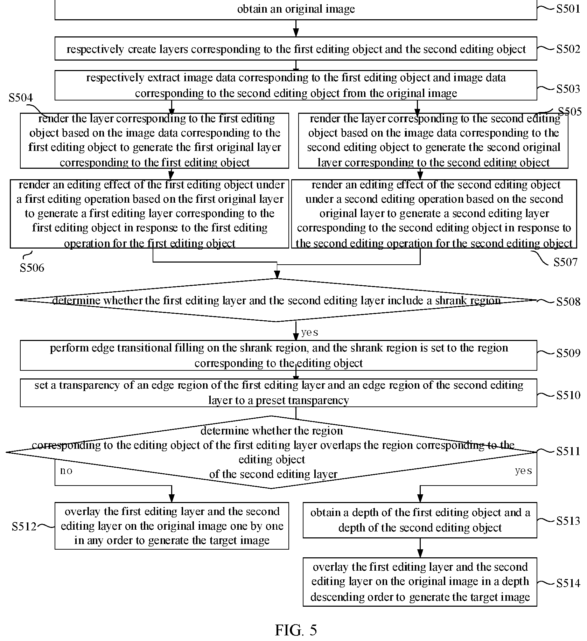

As extension and detailing of the foregoing embodiment, an embodiment of the present application provides another image editing method. With reference to FIG. 5, the image editing method includes the following steps.

S501, an original image is obtained.

The original image includes a first editing object and a second editing object, where the first editing object and the second editing object are located in different image regions of the original image.

S502, layers corresponding to the first editing object and the second editing object, respectively, are created.

That is, a corresponding blank layer is created for each of the first editing object and the second editing object.

In some embodiments, an implementation of step S502 may be as follows: when editing starts, a selection input for the first editing object and the second editing object in the original image is received from a user, and corresponding layers are created for the first editing object and the second editing object in response to the selection input of the user.

In some embodiments, an implementation of step S502 may be as follows: when an editing operation for the first editing object and the second editing object in the original image is received from the user, corresponding layers are created for the first editing object and the second editing object in response to the editing operation of the user.

S503, image data corresponding to the first editing object and image data corresponding to the second editing object are extracted separately from the original image.

In some implementations, an implementation of step S503 may include the following step a to step c.

Step a, an outline of the first editing object and an outline of the second editing object are determined from the original image.

Specifically, the outline of each editing object in the original image may be determined based on an image segmentation algorithm such as a histogram thresholding method, a region growing method, a random field modeling method, a relaxation labeling region segmentation method, a local image function method, and an image filtering method.

Step b, image data within the outline of the first editing object is extracted to obtain the image data corresponding to the first editing object.

Step c, image data within the outline of the second editing object is extracted to obtain the image data corresponding to the second editing object.

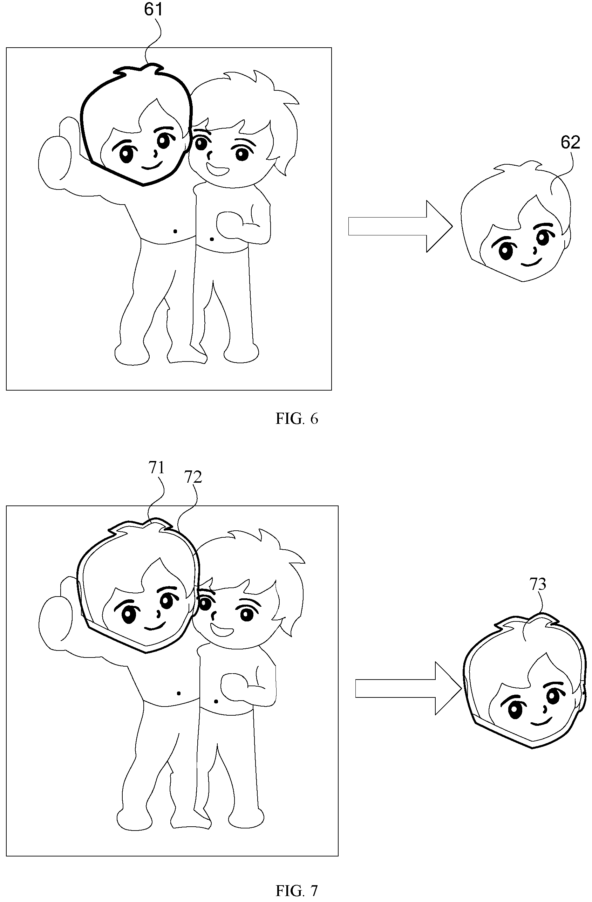

Exemplarily, with reference to FIG. 6, the outline of an editing object is as shown at 61 in FIG. 6 (in bold in FIG. 6), and therefore, the image data within the outline 61 is extracted as the image data corresponding to the editing object. Image rendering is performed based on the image data corresponding to the editing object to obtain an image, as shown at 62 in FIG. 6.

In some implementations, an implementation of step S503 may include the following steps I to step V.

Step I, an outline of the first editing object and an outline of the second editing object are determined from the original image.

Likewise, the outline of the first editing object and the outline of the second editing object may be determined based on the image segmentation algorithm such as the histogram thresholding method, the region growing method, the random field modeling method, the relaxation labeling region segmentation method, the local image function method, and the image filtering method.

Step II, a first image data extraction region corresponding to the first editing object is determined based on the outline of the first editing object.

The outline of the first editing object is located in the first image data extraction region.

Step III, a second image data extraction region corresponding to the second editing object is determined based on the outline of the second editing object.

The outline of the first editing object is located in the first image data extraction region.

In some embodiments, a minimum distance of each point in the edge of the image data extraction region corresponding to any editing object from the outline of the editing object is a preset distance.

Exemplarily, the preset distance may be a distance of N pixels, N being an integer.

Exemplarily, with reference to FIG. 7, the outline of the editing object is as shown at 71 in FIG. 7, and the image data extraction region corresponding to the editing object determined in the original image based on the outline 71 of the editing object is as shown at 72 in FIG. 7. Since the outline 71 of the editing object is located in the image data extraction region 72 corresponding to the editing object, an image obtained by rendering based on the extracted image data corresponding to the editing object is as shown at 73 in FIG. 7, which is slightly larger than the actual editing object.

Step IV, image data within the first image data extraction region is extracted to obtain the image data corresponding to the first editing object.

Step V, image data within the second image data extraction region is extracted to obtain the image data corresponding to the second editing object.

The editing object extracted in the foregoing embodiment is slightly larger than the actual editing object domain. Therefore, after editing each editing object, the edge of the editing object may be smoothed based on a smoothing algorithm such as feather without affecting the actual editing object. Thus, when a final effect picture is synthesized, the fusion effect of the boundary region is enhanced and the image processing effect is improved.

S504, the layer corresponding to the first editing object is rendered based on the image data corresponding to the first editing object to generate the first original layer corresponding to the first editing object.

S505, the layer corresponding to the second editing object is rendered based on the image data corresponding to the second editing object to generate the second original layer corresponding to the second editing object.

S506, an editing result of the first editing object under a first editing operation is rendered based on the first original layer to generate a first editing layer corresponding to the first editing object in response to the first editing operation for the first editing object.

S507, an editing result of the second editing object under a second editing operation is rendered based on the second original layer to generate a second editing layer corresponding to the second editing object in response to the second editing operation for the second editing object.

S508, whether the first editing layer and the second editing layer include a shrank region is determined.

The shrank region is a region that changes from the region corresponding to the editing object to the edge region after editing according to the editing operation corresponding to the editing object.

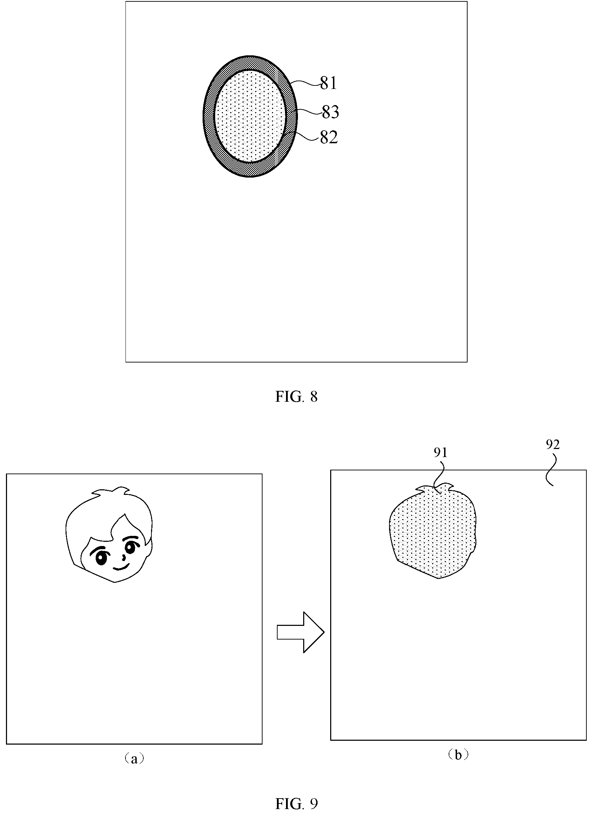

Exemplarily, with reference to FIG. 8, before editing according to the editing operation corresponding to the editing object, the outline of the editing object A is as shown at 81 in FIG. 8, and the region corresponding to the editing object A is the entire region within the outline 81 of the editing object A. After editing according to the editing operation corresponding to the editing object, the outline of the editing object A is as shown at 82 in FIG. 8, and the edge region includes the entire region outside the outline 82 of the editing object A after editing. After editing according to the editing operation corresponding to the editing object, an annular region 83 changes from the region corresponding to the editing object to the edge region. Therefore, the annular region 83 is the shrank region in the editing layer.

In the above step S508, if the first editing layer and/or the second editing layer include(s) the shrank region, the following step S509 is performed on the shrank region.

S509, edge transitional filling is performed on the shrank region, and the shrank region is set to the region corresponding to the editing object.

In the present embodiment, edge transitional filling is performed on the shrank region, and the shrank region is set to the region corresponding to the editing object. Therefore, it can be avoided that the editing object after editing cannot completely cover the original editing object in the original image, thus avoiding an image editing anomaly.

S510, a transparency of an edge region of the first editing layer and an edge region of the second editing layer is set to a preset transparency.

The edge region of the editing layer is a region other than the region corresponding to the editing object in the editing object.

In some embodiments, the preset transparency may be 100%.

Since the shrank region is set to the region corresponding to the editing object in the above step S510, the transparency of the shrank region may not be set to the preset transparency.

Exemplarily, with reference to FIG. 9, the editing layer obtained by editing the original layer corresponding to the editing object B according to the editing operation corresponding to the editing object B is as shown in FIG. 9 (a), and the region corresponding to the editing object in the editing layer is region 91 shown in FIG. 9 (b) and the edge region is region 92 shown in FIG. 9 (b). Therefore, the transparency of the region 92 is set to the preset transparency.

S511, whether the region corresponding to the editing object of the first editing layer overlaps the region corresponding to the editing object of the second editing layer is determined.

Whether the regions corresponding to the editing objects overlap after editing the editing objects is determined.

In the above step S511, if the region corresponding to the editing object of the first editing layer does not overlap the region corresponding to the editing object of the second editing layer, the following step S512 is performed.

S512, the first editing layer and the second editing layer are overlaid on the original image one by one in any order to generate the target image.

Exemplarily, the editing layers may be overlaid on the original image in an editing order to generate the target image.

In the above step S511, if the region corresponding to the editing object of the first editing layer overlaps the region corresponding to the editing object of the second editing layer, the following steps S513 and S514 are performed.

S513, a depth of the first editing object and a depth of the second editing object are obtained.

Specifically, the depth of the editing object in the embodiment of the present application may refer to a scene depth value of the editing object. Since the scene depth value at each position of the editing object may be different, the scene depth values of all pixels corresponding to the editing object may be obtained, and an average value of the scene depth value of the pixels is obtained as the depth of the editing object.

S514, the first editing layer and the second editing layer are overlaid on the original image in a depth descending order to generate the target image.

That is, the editing layer corresponding to the editing object having a greater depth is overlaid and then the editing layer corresponding to the editing object having a smaller depth is overlaid until all editing layers are overlaid on the original image, and the resulting image is the edited target image of the original image.

In the foregoing embodiment, when the regions corresponding to the editing objects of the editing layers overlap, the depths of the editing objects in the original image may also be obtained and the editing layers are overlaid on the original image in the depth descending order to generate the target image. Therefore, the covering relationship between the editing objects in the target image may conform to the actual situation observed by human eyes in the foregoing embodiment, thereby avoiding a covering relationship anomaly between the editing objects in the edited target image.

Further, an implementation of the above step S503 (image data corresponding to the first editing object and image data corresponding to the second editing object are extracted separately from the original image) includes: determining an outline of the first editing object and an outline of the second editing object from the original image; determining a first image data extraction region corresponding to the first editing object and a second image data extraction region corresponding to the second editing object based on the outline of the first editing object and the outline of the second editing object, respectively, where the outline of the first editing object is located in the first image data extraction region, and the outline of the second editing object is located in the second image data extraction region; and extracting image data within the first image data extraction region to obtain the image data corresponding to the first editing object, and extracting image data within the second image data extraction region to obtain the image data corresponding to the second editing object. The image editing method provided in the foregoing embodiment further includes:

smoothing an edge of the first editing object in the first original layer and/or an edge of the second editing object in the second original layer based on a preset smoothing algorithm.

Based on the same concept, as an implementation of the image editing method, an embodiment of the present application further provides an image editing apparatus. The apparatus embodiments correspond to the foregoing method embodiments. For ease of reading, the apparatus embodiments do not present the details in the foregoing method embodiments. However, it will be clear that the image editing apparatus in the present embodiment can correspond to all the contents in the foregoing method embodiments.

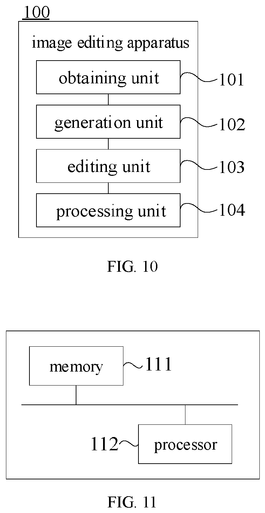

An embodiment of the present application provides an image editing apparatus. FIG. 10 is a structural schematic diagram of the image editing apparatus. As shown in FIG. 10, the image editing apparatus 100 includes:
an obtaining unit 101 configured to obtain an original image, where the original image includes a first editing object and a second editing object, and the first editing object and the second editing object are located in different image regions of the original image;
a generation unit 102 configured to render the first editing object and the second editing object to different layers, respectively, to generate a first original layer corresponding to the first editing object and a second original layer corresponding to the second editing object;
an editing unit 103 configured to, render an editing result of the first editing object under a first editing operation based on the first original layer to generate a first editing layer corresponding to the first editing object in response to the first editing operation for the first editing object, and render an editing result of the second editing object under a second editing operation based on the second original layer to generate a second editing layer corresponding to the second editing object in response to the second editing operation for the second editing object; and
a processing unit 104 configured to generate, based on the first editing layer and the second editing layer, a target image as an editing result of the original image.

In some implementations, the generation unit 102 is specifically configured to: create layers corresponding to the first editing object and the second editing object, respectively, separately extracting image data corresponding to the first editing object and image data corresponding to the second editing object from the original image; and rendering the layer corresponding to the first editing object based on the image data corresponding to the first editing object to generate the first original layer corresponding to the first editing object, and rendering the layer corresponding to the second editing object based on the image data corresponding to the second editing object to generate the second original layer corresponding to the second editing object.

In some implementations, the generation unit 102 is specifically configured to: determine an outline of the first editing object and an outline of the second editing object from the original image; and extract image data within the outline of the first editing object to obtain the image data corresponding to the first editing object, and extract image data within the outline of the second editing object to obtain the image data corresponding to the second editing object.

In some implementations, the generation unit 102 is specifically configured to: determine an outline of the first editing object and an outline of the second editing object from the original image; determine a first image data extraction region corresponding to the first editing object and a second image data extraction region corresponding to the second editing object based on the outline of the first editing object and the outline of the second editing object, respectively, where the outline of the first editing object is located in the first image data extraction region, and the outline of the second editing object is located in the second image data extraction region; and extract image data within the first image data extraction region to obtain the image data corresponding to the first editing object, and extract image data within the second image data extraction region to obtain the image data corresponding to the second editing object.

In some implementations, the processing unit 104 is further configured to: smooth an edge of the first editing object in the first original layer and/or an edge of the second editing object in the second original layer based on a preset smoothing algorithm.

In some implementations, the processing unit 104 is specifically configured to: set a transparency of an edge region of the first editing layer and an edge region of the second editing layer to a preset transparency, where the edge region is a region other than a region corresponding to an editing object in an editing layer; and overlay the first editing layer and the second editing layer on the original image to generate the target image.

The edge region is a region other than a region corresponding to an editing object in an editing layer.

In some implementations, the processing unit 104 is specifically configured to: determine whether the region corresponding to the editing object of the first editing layer overlaps the region corresponding to the editing object of the second editing layer; and if the region corresponding to the editing object of the first editing layer does not overlap the region corresponding to the editing object of the second editing layer, overlay the first editing layer and the second editing layer on the original image in any order to generate the target image.

In some implementations, the processing unit 104 is specifically configured to: obtain a depth of the first editing object and a depth of the second editing object; and overlay the first editing layer and the second editing layer on the original image in a depth descending order to generate the target image.

In some implementations, the processing unit 104 is specifically configured to: before setting the transparency of the edge region of the first editing layer and the edge region of the second editing layer to the preset transparency, determine whether the first editing layer and the second editing layer include a shrank region, where the shrank region is a region that changes from the region corresponding to the editing object to the edge region after editing; and if yes, perform edge transitional filling on the shrank region, and set the shrank region to the region corresponding to the editing object.

The image editing apparatus provided in the present embodiment can perform the image editing method provided in the foregoing method embodiments, and the implementation principles and technical effects are similar, which will not be described herein.

Based on the same concept, an embodiment of the present application further provides an electronic device. FIG. 11 is a structural schematic diagram of an electronic device provided in an embodiment of the present application. As shown in FIG. 11, the electronic device provided in the present embodiment includes a memory 111 and a processor 112, where the memory 111 is configured to store a computer program; and the processor 112 is configured to perform the image editing method provided in the foregoing embodiments when invoking the computer program.

Based on the same concept, an embodiment of the present application further provides a computer-readable storage medium. A computer program is stored on the computer-readable storage medium, and when executed by a processor, causes a computing device to implement the image editing method provided in the foregoing embodiments.

Based on the same concept, an embodiment of the present application further provides a computer program product which, when running on a computer, causes the computer to implement the image editing method provided in the foregoing embodiments.

Those skilled in the art should understand that the embodiments of the present application may be provided as a method, a system, or a computer program product. Therefore, the present application may use a form of hardware only embodiments, software only embodiments, or embodiments with a combination of software and hardware. Moreover, the present application may take the form of a computer program product that is implemented on one or more computer-usable storage media that include computer-usable program code.

The processor may be a central processing unit (CPU), and may also be other general-purpose processor, a digital signal processor (DSP), an application specific integrated circuit (ASIC), a field-programmable gate array (FPGA) or other programmable logic device, a discrete gate, a transistor logic device, a discrete hardware component, etc. The general-purpose processor may be a microprocessor, or the processor may be any conventional processor, etc.

The memory may include a non-permanent memory in a computer-readable medium and may take the form of a random access memory (RAM) and/or a non-volatile memory, such as a read only memory (ROM) or a flash RAM. The memory is an example of the computer-readable medium.

The computer-readable medium includes permanent and non-permanent, removable and non-removable storage mediums. The storage medium may realize information storage by any method or technique. The information may be computer-readable instructions, data structures, program modules, or other data. Examples of the storage medium of the computer include but are not limited to a phase-change RAM (PRAM), a static random access memory (SRAM), a dynamic random access memory (DRAM), other types of RAMs and ROMs, an electrically erasable programmable read-only memory (EEPROM), a flash memory or other memory techniques, a compact disk read-only memory (CD-ROM), a digital versatile disc (DVD), or other optical storage, a cassette type magnetic tape, disk storage, or other magnetic storage device, or nay other non-transmission medium, that can be used to store information accessible by computing devices. According to the definitions herein, the computer-readable medium does not include transitory computer-readable media, such as modulated data signals and carriers.

The invention is defined by the appended claims.

## Claims

1. An image editing method comprising
obtaining (S101) an original image, wherein the original image comprises a first editing object and a second editing object, and the first editing object and the second editing object are in different image regions of the original image;
rendering (S102) the first editing object and the second editing object to different layers respectively, to generate a first original layer corresponding to the first editing object and a second original layer corresponding to the second editing object;
rendering (S103) an editing result of the first editing object under a first editing operation based on the first original layer to generate a first editing layer corresponding to the first editing object in response to the first editing operation for the first editing object, and rendering (S104) an editing result of the second editing object under a second editing operation based on the second original layer to generate a second editing layer corresponding to the second editing object in response to the second editing operation for the second editing object; and
generating (S105), based on the first editing layer and the second editing layer, a target image as an editing result of the original image;
wherein the generating, based on the first editing layer and the second editing layer, a target image comprises:
setting a transparency of an edge region of the first editing layer and an edge region of the second editing layer to a preset transparency, wherein the edge region is a region in an editing layer except for a region corresponding to an editing object; and
overlaying the first editing layer and the second editing layer on the original image, respectively, to generate the target image;
wherein before the setting a transparency of an edge region of the first editing layer and an edge region of the second editing layer to a preset transparency, the method being **characterised in that** it further comprises :
determining whether the first editing layer and the second editing layer comprise a shrank region, wherein the shrank region is a region that changes from the region corresponding to the editing object to the edge region after editing; and
in response to the first editing layer and the second editing layer comprising the shrank region, performing edge transitional filling on the shrank region, and setting the shrank region to the region corresponding to the editing object.

2. The image editing method according to claim 1, wherein the rendering the first editing object and the second editing object to different layers respectively, to generate a first original layer corresponding to the first editing object and a second original layer corresponding to the second editing object comprises:
creating layers corresponding to the first editing object and the second editing object, respectively;
extracting separately image data corresponding to the first editing object and image data corresponding to the second editing object from the original image; and
rendering the layer corresponding to the first editing object based on the image data corresponding to the first editing object to generate the first original layer corresponding to the first editing object, and rendering the layer corresponding to the second editing object based on the image data corresponding to the second editing object to generate the second original layer corresponding to the second editing object.

3. The image editing method according to claim 2, wherein the extracting separately image data corresponding to the first editing object and image data corresponding to the second editing object from the original image comprises:
determining an outline of the first editing object and an outline of the second editing object from the original image; and
extracting image data within the outline of the first editing object to obtain the image data corresponding to the first editing object, and extracting image data within the outline of the second editing object to obtain the image data corresponding to the second editing object.

4. The image editing method according to claim 2 or 3, wherein the extracting separately image data corresponding to the first editing object and image data corresponding to the second editing object from the original image comprises:
determining an outline of the first editing object and an outline of the second editing object from the original image;
determining a first image data extraction region corresponding to the first editing object and a second image data extraction region corresponding to the second editing object based on the outline of the first editing object and the outline of the second editing object, respectively, wherein the outline of the first editing object is in the first image data extraction region, and the outline of the second editing object is in the second image data extraction region; and
extracting image data within the first image data extraction region to obtain the image data corresponding to the first editing object, and extracting image data within the second image data extraction region to obtain the image data corresponding to the second editing object.

5. The image editing method according to claim 4, further comprising:
smoothing an edge of the first editing object in the first original layer and/or an edge of the second editing object in the second original layer based on a preset smoothing algorithm.

6. The image editing method according to claim 1, wherein the overlaying the first editing layer and the second editing layer respectively on the original image to generate the target image comprises:
determining whether a region corresponding to the first editing object of the first editing layer overlaps a region corresponding to the second editing object of the second editing layer; and
in response to the region corresponding to the first editing object of the first editing layer not overlapping the region corresponding to the second editing object of the second editing layer, overlaying the first editing layer and the second editing layer on the original image in any order to generate the target image.

7. The image editing method according to claim 6, wherein
in response to the region corresponding to the first editing object of the first editing layer overlapping the region corresponding to the second editing object of the second editing layer, obtaining a depth of the first editing object and a depth of the second editing object; and
overlaying the first editing layer and the second editing layer on the original image in a depth descending order to generate the target image.

8. An image editing apparatus, comprising:
an obtaining unit (101), configured to obtain an original image, wherein the original image comprises a first editing object and a second editing object, and the first editing object and the second editing object are in different image regions of the original image;
a generation unit (102), configured to render the first editing object and the second editing object to different layers, respectively, to generate a first original layer corresponding to the first editing object and a second original layer corresponding to the second editing object;
an editing unit (103), configured to render an editing result of the first editing object under a first editing operation based on the first original layer to generate a first editing layer corresponding to the first editing object, in response to the first editing operation for the first editing object, and render an editing result of the second editing object under a second editing operation based on the second original layer to generate a second editing layer corresponding to the second editing object in response to the second editing operation for the second editing object; and
a processing unit (104), configured to generate, based on the first editing layer and the second editing layer, a target image as an editing result of the original image;
wherein the processing unit (104) is further configured to:
set a transparency of an edge region of the first editing layer and an edge region of the second editing layer to a preset transparency, wherein the edge region is a region in an editing layer except for a region corresponding to an editing object; and
overlay the first editing layer and the second editing layer on the original image, respectively, to generate the target image;
wherein before setting the transparency of the edge region of the first editing layer and the edge region of the second editing layer to the preset transparency, the processing unit (104) is **characterised by** being configured to:
determine whether the first editing layer and the second editing layer comprise a shrank region, wherein the shrank region is a region that changes from the region corresponding to the editing object to the edge region after editing; and
in response to the first editing layer and the second editing layer comprising the shrank region, perform edge transitional filling on the shrank region, and set the shrank region to the region corresponding to the editing object.

9. An electronic device, comprising a memory (111) and a processor (112), wherein the memory (111) is configured to store a computer program; and the processor (112) is configured to, when invoking the computer program, cause the electronic device to implement an image editing method, wherein
the image editing method comprises:
obtaining an original image, wherein the original image comprises a first editing object and a second editing object, and the first editing object and the second editing object are in different image regions of the original image;
rendering the first editing object and the second editing object to different layers respectively, to generate a first original layer corresponding to the first editing object and a second original layer corresponding to the second editing object;
rendering an editing result of the first editing object under a first editing operation based on the first original layer to generate a first editing layer corresponding to the first editing object in response to the first editing operation for the first editing object, and rendering an editing result of the second editing object under a second editing operation based on the second original layer to generate a second editing layer corresponding to the second editing object in response to the second editing operation for the second editing object; and
generating, based on the first editing layer and the second editing layer, a target image as an editing result of the original image;
wherein the generating, based on the first editing layer and the second editing layer, a target image comprises:
setting a transparency of an edge region of the first editing layer and an edge region of the second editing layer to a preset transparency, wherein the edge region is a region in an editing layer except for a region corresponding to an editing object; and
overlaying the first editing layer and the second editing layer on the original image, respectively, to generate the target image;
wherein before the setting a transparency of an edge region of the first editing layer and an edge region of the second editing layer to a preset transparency, the method being **characterised by** further comprising :
determining whether the first editing layer and the second editing layer comprise a shrank region, wherein the shrank region is a region that changes from the region corresponding to the editing object to the edge region after editing; and
in response to the first editing layer and the second editing layer comprising the shrank region, performing edge transitional filling on the shrank region, and setting the shrank region to the region corresponding to the editing object.

10. A computer-readable storage medium storing a computer program, wherein the computer program, when executed by a computing device, causes the computing device to implement the image editing method according to any one of claims 1 to 7.

11. A computer program product, wherein the computer program product, when executing on a computer, causes the computer to implement the image editing method according to any one of claims 1 to 7.

## Patentansprüche

1. Bildbearbeitungsverfahren, umfassend
Erhalten (S101) eines Originalbildes, wobei das Originalbild ein erstes Bearbeitungsobjekt und ein zweites Bearbeitungsobjekt umfasst und das erste Bearbeitungsobjekt und das zweite Bearbeitungsobjekt in unterschiedlichen Bildbereichen des Originalbildes liegen;
Rendern (S102) des ersten Bearbeitungsobjekts und des zweiten Bearbeitungsobjekts jeweils auf unterschiedliche Ebenen, um eine erste Originalebene zu erzeugen, die dem ersten Bearbeitungsobjekt entspricht, und eine zweite Originalebene, die dem zweiten Bearbeitungsobjekt entspricht;
Rendern (S103) eines Bearbeitungsergebnisses des ersten Bearbeitungsobjekts unter einem ersten Bearbeitungsvorgang basierend auf der ersten Originalebene, um als Reaktion auf den ersten Bearbeitungsvorgang für das erste Bearbeitungsobjekt eine erste Bearbeitungsebene zu erzeugen, die dem ersten Bearbeitungsobjekt entspricht, und Rendern (S104) eines Bearbeitungsergebnisses des zweiten Bearbeitungsobjekts unter einem zweiten Bearbeitungsvorgang basierend auf der zweiten Originalebene, um als Reaktion auf den zweiten Bearbeitungsvorgang für das zweite Bearbeitungsobjekt entspricht eine zweite Bearbeitungsebene zu erzeugen, die dem zweiten Bearbeitungsobjekt; und
Erzeugen (S105), basierend auf der ersten Bearbeitungsebene und der zweiten Bearbeitungsebene, eines Zielbildes als Bearbeitungsergebnis des Originalbildes;
wobei das Erzeugen eines Zielbildes basierend auf der ersten Bearbeitungsebene und der zweiten Bearbeitungsebene Folgendes umfasst:
Einstellen einer Transparenz eines Randbereichs der ersten Bearbeitungsebene und eines Randbereichs der zweiten Bearbeitungsebene auf eine voreingestellte Transparenz, wobei der Randbereich ein Bereich in einer Bearbeitungsebene ist, mit Ausnahme eines Bereichs, der einem Bearbeitungsobjekt entspricht; und
Überlagern der ersten Bearbeitungsebene und der zweiten Bearbeitungsebene auf dem Originalbild, um das Zielbild zu erzeugen;
wobei das Verfahren vor dem Einstellen der Transparenz eines Randbereichs der ersten Bearbeitungsebene und eines Randbereichs der zweiten Bearbeitungsebene auf eine voreingestellte Transparenz **dadurch gekennzeichnet ist, dass** es weiter Folgendes umfasst:
Bestimmen, ob die erste Bearbeitungsebene und die zweite Bearbeitungsebene einen verkleinerten Bereich umfassen, wobei der verkleinerte Bereich ein Bereich ist, der sich nach dem Bearbeiten des Bereichs, der dem Bearbeitungsobjekt entspricht, zum Randbereich ändert; und
als Reaktion darauf, dass die erste Bearbeitungsebene und die zweite Bearbeitungsebene den verkleinerten Bereich umfassen, Durchführen von Kantenübergangsfüllung im verkleinerten Bereich und Einstellen des verkleinerten Bereichs auf den Bereich, der dem Bearbeitungsobjekt entspricht.

2. Bildbearbeitungsverfahren nach Anspruch 1, wobei das Rendern des ersten Bearbeitungsobjekts und des zweiten Bearbeitungsobjekts jeweils auf unterschiedliche Ebenen, um eine erste Originalebene zu erzeugen, die dem ersten Bearbeitungsobjekt entspricht, und eine zweite Originalebene, die dem zweiten Bearbeitungsobjekt entspricht, Folgendes umfasst:
Erstellen von Ebenen, die jeweils dem ersten Bearbeitungsobjekt und dem zweiten Bearbeitungsobjekt entsprechen;
getrenntes Extrahieren aus dem Originalbild von Bilddaten, die dem ersten Bearbeitungsobjekt entsprechen, und von Bilddaten, die dem zweiten Bearbeitungsobjekt entsprechen; und
Rendern der Ebene, die dem ersten Bearbeitungsobjekt entspricht, basierend auf den Bilddaten, die dem ersten Bearbeitungsobjekt entsprechen, um die erste Originalebene zu erzeugen, die dem ersten Bearbeitungsobjekt entspricht, und Rendern der Ebene, die dem zweiten Bearbeitungsobjekt entspricht, basierend auf den Bilddaten, die dem zweiten Bearbeitungsobjekt entsprechen, um die zweite Originalebene zu erzeugen, die dem zweiten Bearbeitungsobjekt entspricht.

3. Bildbearbeitungsverfahren nach Anspruch 2, wobei das getrennte Extrahieren aus dem Originalbild von Bilddaten, die dem ersten Bearbeitungsobjekt entsprechen, und von Bilddaten, die dem zweiten Bearbeitungsobjekt entsprechen, Folgendes umfasst:
Bestimmen einer Kontur des ersten Bearbeitungsobjekts und einer Kontur des zweiten Bearbeitungsobjekts aus dem Originalbild; und
Extrahieren von Bilddaten innerhalb der Kontur des ersten Bearbeitungsobjekts, um die Bilddaten zu erhalten, die dem ersten Bearbeitungsobjekt entsprechen, und Extrahieren von Bilddaten innerhalb der Kontur des zweiten Bearbeitungsobjekts, um die Bilddaten zu erhalten, die dem zweiten Bearbeitungsobjekt entsprechen.

4. Bildbearbeitungsverfahren nach Anspruch 2 oder 3, wobei das getrennte Extrahieren aus dem Originalbild von Bilddaten, die dem ersten Bearbeitungsobjekt entsprechen, und von Bilddaten, die dem zweiten Bearbeitungsobjekt entsprechen, Folgendes umfasst:
Bestimmen einer Kontur des ersten Bearbeitungsobjekts und einer Kontur des zweiten Bearbeitungsobjekts aus dem Originalbild;
Bestimmen eines ersten Bilddatenextraktionsbereichs, der dem ersten Bearbeitungsobjekt entspricht, und eines zweiten Bilddatenextraktionsbereichs, der dem zweiten Bearbeitungsobjekt entspricht, basierend auf der Kontur des ersten Bearbeitungsobjekts bzw. der Kontur des zweiten Bearbeitungsobjekts, wobei die Kontur des ersten Bearbeitungsobjekts im ersten Bilddatenextraktionsbereich liegt und die Kontur des zweiten Bearbeitungsobjekts im zweiten Bilddatenextraktionsbereich liegt; und
Extrahieren von Bilddaten innerhalb des ersten Bilddatenextraktionsbereichs, um die Bilddaten zu erhalten, die dem ersten Bearbeitungsobjekt entsprechen, und Extrahieren von Bilddaten innerhalb des zweiten Bilddatenextraktionsbereichs, um die Bilddaten zu erhalten, die dem zweiten Bearbeitungsobjekt entsprechen.

5. Bildbearbeitungsverfahren nach Anspruch 4, weiter umfassend:
Glätten einer Kante des ersten Bearbeitungsobjekts in der ersten Originalebene und/oder einer Kante des zweiten Bearbeitungsobjekts in der zweiten Originalebene basierend auf einem voreingestellten Glättungsalgorithmus.

6. Bildbearbeitungsverfahren nach Anspruch 1, wobei das Überlagern der ersten Bearbeitungsebene und der zweiten Bearbeitungsebene auf dem Originalbild, um das Zielbild zu erzeugen, Folgendes umfasst:
Bestimmen, ob sich ein Bereich, der dem ersten Bearbeitungsobjekt der ersten Bearbeitungsebene entspricht, mit einem Bereich überlagert, der dem zweiten Bearbeitungsobjekt der zweiten Bearbeitungsebene entspricht; und
als Reaktion darauf, dass der Bereich, der dem ersten Bearbeitungsobjekt der ersten Bearbeitungsebene entspricht, nicht den Bereich überschneidet, der dem zweiten Bearbeitungsobjekt der zweiten Bearbeitungsebene entspricht, Überlagern der ersten Bearbeitungsebene und der zweiten Bearbeitungsebene in beliebiger Reihenfolge auf dem Originalbild, um das Zielbild zu erzeugen.

7. Bildbearbeitungsverfahren nach Anspruch 6, wobei
als Reaktion darauf, dass sich der Bereich, der dem ersten Bearbeitungsobjekt der ersten Bearbeitungsebene entspricht, mit dem Bereich, der dem zweiten Bearbeitungsobjekt der zweiten Bearbeitungsebene entspricht, überschneidet, Erhalten einer Tiefe des ersten Bearbeitungsobjekts und einer Tiefe des zweiten Bearbeitungsobjekts; und
Überlagern der ersten Bearbeitungsebene und der zweiten Bearbeitungsebene auf dem Originalbild in absteigender Reihenfolge einer Bildtiefe, um das Zielbild zu erzeugen.

8. Bildbearbeitungseinrichtung, umfassend:
eine Erhaltungseinheit (101), die so konfiguriert ist, dass sie ein Originalbild erhält, wobei das Originalbild ein erstes Bearbeitungsobjekt und ein zweites Bearbeitungsobjekt umfasst und das erste Bearbeitungsobjekt und das zweite Bearbeitungsobjekt in verschiedenen Bildbereichen des Originalbildes liegen;
eine Erzeugungseinheit (102), die so konfiguriert ist, dass sie das erste Bearbeitungsobjekt und das zweite Bearbeitungsobjekt jeweils auf unterschiedlichen Ebenen rendert, um eine erste Originalebene zu erzeugen, die dem ersten Bearbeitungsobjekt entspricht, und eine zweite Originalebene, die dem zweiten Bearbeitungsobjekt entspricht;
eine Bearbeitungseinheit (103), die so konfiguriert ist, dass sie ein Bearbeitungsergebnis des ersten Bearbeitungsobjekts unter einem ersten Bearbeitungsvorgang basierend der ersten Originalebene rendert, um eine erste Bearbeitungsebene zu erzeugen, die dem ersten Bearbeitungsobjekt entspricht, als Reaktion auf den ersten Bearbeitungsvorgang für das erste Bearbeitungsobjekt, und ein Bearbeitungsergebnis des zweiten Bearbeitungsobjekts unter einem zweiten Bearbeitungsvorgang basierend auf der zweiten Originalebene rendert, um als Reaktion auf den zweiten Bearbeitungsvorgang für das zweite Bearbeitungsobjekt eine zweite Bearbeitungsebene zu erzeugen, die dem zweiten Bearbeitungsobjekt entspricht; und
eine Verarbeitungseinheit (104), die so konfiguriert ist, dass sie basierend auf der ersten Bearbeitungsebene und der zweiten Bearbeitungsebene ein Zielbild als Bearbeitungsergebnis des Originalbildes erzeugt;
wobei die Verarbeitungseinheit (104) weiter konfiguriert ist zum:
Einstellen einer Transparenz eines Randbereichs der ersten Bearbeitungsebene und eines Randbereichs der zweiten Bearbeitungsebene auf eine voreingestellte Transparenz, wobei der Randbereich ein Bereich in einer Bearbeitungsebene ist, mit Ausnahme eines Bereichs, der einem Bearbeitungsobjekt entspricht; und
Überlagern der ersten Bearbeitungsebene und der zweiten Bearbeitungsebene auf dem Originalbild, um das Zielbild zu erzeugen;
wobei die Verarbeitungseinheit (104) **dadurch gekennzeichnet ist, dass** sie vor Einstellen der Transparenz des Randbereichs der ersten Bearbeitungsebene und des Randbereichs der zweiten Bearbeitungsebene auf die voreingestellte Transparenz konfiguriert ist zum:
Bestimmen, ob die erste Bearbeitungsebene und die zweite Bearbeitungsebene einen verkleinerten Bereich umfassen, wobei der verkleinerte Bereich ein Bereich ist, der sich nach dem Bearbeiten des Bereichs, der dem Bearbeitungsobjekt entspricht, zum Randbereich ändert; und
als Reaktion darauf, dass die erste Bearbeitungsebene und die zweite Bearbeitungsebene den verkleinerten Bereich umfassen, Durchführen von Kantenübergangsfüllung im verkleinerten Bereich und Einstellen des verkleinerten Bereichs auf den Bereich, der dem Bearbeitungsobjekt entspricht.

9. Elektronische Vorrichtung, umfassend einen Speicher (111) und einen Prozessor (112), wobei der Speicher (111) so konfiguriert ist, dass er ein Computerprogramm speichert; und der Prozessor (112) so konfiguriert ist, dass er beim Aufrufen des Computerprogramms bewirkt, dass die elektronische Vorrichtung ein Bildbearbeitungsverfahren implementiert, wobei
das Bildbearbeitungsverfahren Folgendes umfasst:
Erhalten eines Originalbildes, wobei das Originalbild ein erstes Bearbeitungsobjekt und ein zweites Bearbeitungsobjekt umfasst und das erste Bearbeitungsobjekt und das zweite Bearbeitungsobjekt in unterschiedlichen Bildbereichen des Originalbildes liegen;
Rendern des ersten Bearbeitungsobjekts und des zweiten Bearbeitungsobjekts jeweils auf unterschiedliche Ebenen, um eine erste Originalebene zu erzeugen, die dem ersten Bearbeitungsobjekt entspricht, und eine zweite Originalebene, die dem zweiten Bearbeitungsobjekt entspricht;
Rendern eines Bearbeitungsergebnisses des ersten Bearbeitungsobjekts unter einem ersten Bearbeitungsvorgang basierend auf der ersten Originalebene, um als Reaktion auf den ersten Bearbeitungsvorgang für das erste Bearbeitungsobjekt eine erste Bearbeitungsebene zu erzeugen, die dem ersten Bearbeitungsobjekt entspricht, und Rendern eines Bearbeitungsergebnisses des zweiten Bearbeitungsobjekts unter einem zweiten Bearbeitungsvorgang basierend auf der zweiten Originalebene, um als Reaktion auf den zweiten Bearbeitungsvorgang für das zweite Bearbeitungsobjekt entspricht eine zweite Bearbeitungsebene zu erzeugen, die dem zweiten Bearbeitungsobjekt; und
Erzeugen, basierend auf der ersten Bearbeitungsebene und der zweiten Bearbeitungsebene, eines Zielbildes als Bearbeitungsergebnis des Originalbildes;
wobei das Erzeugen eines Zielbildes basierend auf der ersten Bearbeitungsebene und der zweiten Bearbeitungsebene Folgendes umfasst:
Einstellen einer Transparenz eines Randbereichs der ersten Bearbeitungsebene und eines Randbereichs der zweiten Bearbeitungsebene auf eine voreingestellte Transparenz, wobei der Randbereich ein Bereich in einer Bearbeitungsebene ist, mit Ausnahme eines Bereichs, der einem Bearbeitungsobjekt entspricht; und
Überlagern der ersten Bearbeitungsebene und der zweiten Bearbeitungsebene auf dem Originalbild, um das Zielbild zu erzeugen;
wobei das Verfahren vor dem Einstellen der Transparenz eines Randbereichs der ersten Bearbeitungsebene und eines Randbereichs der zweiten Bearbeitungsebene auf eine voreingestellte Transparenz **dadurch gekennzeichnet ist, dass** es weiter Folgendes umfasst:
Bestimmen, ob die erste Bearbeitungsebene und die zweite Bearbeitungsebene einen verkleinerten Bereich umfassen, wobei der verkleinerte Bereich ein Bereich ist, der sich nach dem Bearbeiten des Bereichs, der dem Bearbeitungsobjekt entspricht, zum Randbereich ändert; und
als Reaktion darauf, dass die erste Bearbeitungsebene und die zweite Bearbeitungsebene den verkleinerten Bereich umfassen, Durchführen von Kantenübergangsfüllung im verkleinerten Bereich und Einstellen des verkleinerten Bereichs auf den Bereich, der dem Bearbeitungsobjekt entspricht.

10. Computerlesbares Speichermedium, das ein Computerprogramm speichert, wobei das Computerprogramm, wenn es von einer Rechenvorrichtung ausgeführt wird, bewirkt, dass die Rechenvorrichtung das Verfahren nach einem der Ansprüche 1 bis 7 implementiert.

11. Computerprogrammprodukt, wobei das Computerprogrammprodukt, wenn es auf einem Computer ausgeführt wird, bewirkt, dass der Computer das Bildbearbeitungsverfahren nach einem der Ansprüche 1 bis 7 implementiert.

## Revendications

1. Procédé de retouche d'image, comprenant
l'obtention (S101) d'une image d'origine, dans lequel l'image d'origine comprend un premier objet de retouche et un second objet de retouche, et le premier objet de retouche et le second objet de retouche se trouvent dans des régions d'image différentes de l'image d'origine ;
le rendu (S102) du premier objet de retouche et du second objet de retouche sur des couches différentes, respectivement, pour générer une première couche d'origine correspondant au premier objet de retouche et une seconde couche d'origine correspondant au second objet de retouche ;
le rendu (S103) d'un résultat de retouche du premier objet de retouche lors d'une première opération de retouche basée sur la première couche d'origine afin de générer une première couche de retouche correspondant au premier objet de retouche en réponse à la première opération de retouche pour le premier objet de retouche, et le rendu (S104) d'un résultat de retouche du second objet de retouche lors d'une seconde opération de retouche basée sur la seconde couche d'origine afin de générer une seconde couche de retouche correspondant au second objet de retouche en réponse à la seconde opération de retouche pour le second objet de retouche ; et
la génération (S105), sur la base de la première couche de retouche et de la seconde couche de retouche, d'une image cible comme résultat de retouche de l'image d'origine ;
dans lequel la génération, sur la base de la première couche de retouche et la seconde couche de retouche, d'une image cible comprend :
la définition d'une transparence d'une région de bord de la première couche de retouche et d'une région de bord d'une seconde couche de retouche à une transparence prédéfinie, dans lequel la région de bord est une région dans une couche de retouche autre qu'une région correspondant à un objet de retouche ; et
la superposition de la première couche de retouche et de la seconde couche de retouche, respectivement, sur l'image d'origine pour générer l'image cible ;
dans lequel, avant de définir une transparence d'une région de bord de la première couche de retouche et d'une région de bord de la seconde couche de retouche à une transparence prédéfinie, le procédé est **caractérisé en ce qu'**il comprend en outre :
la détermination si la première couche de retouche et la seconde couche de retouche comprennent une région réduite, dans lequel la région réduite est une région qui change de la région correspondant à l'objet de retouche à la région de bord après retouche ; et
en réponse à la première couche de retouche et à la seconde couche de retouche comprenant la région réduite, la réalisation d'un remplissage de transition de bord sur la région réduite et définir la région réduite sur la région correspondant à l'objet de retouche.

2. Procédé de retouche d'image selon la revendication 1, dans lequel le rendu du premier objet de retouche et du second objet de retouche sur des couches différentes, respectivement, afin de générer une première couche d'origine correspondant au premier objet de retouche et une seconde couche d'origine correspondant au second objet de retouche, comprend :
la création de couches correspondant respectivement au premier objet de retouche et au second objet de retouche ;
l'extraction séparée de données d'image correspondant au premier objet de retouche et de données d'image correspondant au second objet de retouche à partir de l'image d'origine ; et
le rendu de la couche correspondant au premier objet de retouche sur la base des données d'image correspondant au premier objet de retouche pour générer la première couche d'origine correspondant au premier objet de retouche ; et le rendu de la couche correspondant au second objet de retouche, sur la base des données d'image correspondant au second objet de retouche pour générer la seconde couche d'origine correspondant au second objet de retouche.

3. Procédé de retouche d'image selon la revendication 2, dans lequel l'extraction séparée de données d'image correspondant au premier objet de retouche et de données d'image correspondant au second objet de retouche à partir de l'image d'origine comprend :
la détermination d'un contour du premier objet de retouche et d'un contour du second objet de retouche à partir de l'image d'origine ; et
l'extraction de données d'image à l'intérieur du contour du premier objet de retouche pour obtenir les données d'image correspondant au premier objet de retouche, et l'extraction de données d'image à l'intérieur du contour du second objet de retouche pour obtenir les données d'image correspondant au second objet de retouche.

4. Procédé de retouche d'image selon la revendication 2 ou 3, dans lequel l'extraction séparée de données d'image correspondant au premier objet de retouche et de données d'image correspondant au second objet de retouche à partir de l'image d'origine comprend :
la détermination d'un contour du premier objet de retouche et d'un contour du second objet de retouche à partir de l'image d'origine ;
la détermination d'une première région d'extraction de données d'image correspondant au premier objet de retouche et d'une seconde région d'extraction de données d'image correspondant au second objet de retouche sur la base du contour du premier objet de retouche et du contour du second objet de retouche, respectivement, dans lequel le contour du premier objet de retouche se trouve dans la première région d'extraction de données d'image et le contour du second objet de retouche se trouve dans la seconde région d'extraction de données d'image ;
l'extraction de données d'image dans la première région d'extraction de données d'image pour obtenir les données d'image correspondant au premier objet de retouche, et l'extraction de données d'image dans la seconde région d'extraction de données d'image pour obtenir les données d'image correspondant au second objet de retouche.

5. Procédé de retouche d'image selon la revendication 4, comprenant en outre :
le lissage d'un bord du premier objet de retouche dans la première couche d'origine et/ou d'un bord du second objet de retouche dans la seconde couche d'origine sur la base d'un algorithme de lissage prédéfini.

6. Procédé de retouche d'image selon la revendication 1, dans lequel la superposition de la première couche de retouche et de la seconde couche de retouche sur l'image d'origine pour générer l'image cible comprend :
la détermination si une région correspondant au premier objet de retouche de la première couche de retouche chevauche une région correspondant au second objet de retouche de la seconde couche de retouche ; et
en réponse à la région correspondant au premier objet de retouche de la première couche de retouche ne chevauchant pas la région correspondant au second objet de retouche de la seconde couche de retouche, la superposition de la première couche de retouche et de la seconde couche de retouche sur l'image d'origine dans un ordre quelconque pour générer l'image cible.

7. Procédé de retouche d'image selon la revendication 6, dans lequel
en réponse à la région correspondant au premier objet de retouche de la première couche de retouche chevauchant la région correspondant au second objet de retouche de la seconde couche de retouche, obtenir une profondeur du premier objet de retouche et une profondeur du second objet de retouche ; et
superposer la première couche de retouche et la seconde couche de retouche sur l'image d'origine, par ordre décroissant de profondeur, pour générer l'image cible.

8. Appareil de retouche d'image, comprenant :
une unité d'obtention (101), configurée pour obtenir une image d'origine, dans lequel l'image d'origine comprend un premier objet de retouche et un second objet de retouche, et le premier objet de retouche et le second objet de retouche se trouvent dans des régions d'image différentes de l'image d'origine ;
une unité de génération (102), configurée pour rendre le premier objet de retouche et le second objet de retouche sur des couches différentes, respectivement, pour générer une première couche d'origine correspondant au premier objet de retouche et une seconde couche d'origine correspondant au second objet de retouche ;
une unité de retouche (103), configurée pour rendre un résultat de retouche du premier objet de retouche lors d'une première opération de retouche basée sur la première couche d'origine afin de générer une première couche de retouche correspondant au premier objet de retouche en réponse à la première opération de retouche pour le premier objet de retouche, et rendre un résultat de retouche du second objet de retouche lors d'une seconde opération de retouche basée sur la seconde couche d'origine afin de générer une seconde couche de retouche correspondant au second objet de retouche en réponse à la seconde opération de retouche pour le second objet de retouche ; et
une unité de traitement (104), configurée pour générer, sur la base de la première couche de retouche et de la seconde couche de retouche, une image cible comme résultat de retouche de l'image d'origine ;
dans lequel l'unité de traitement (104) est en outre configurée pour :
définir une transparence d'une région de bord de la première couche de retouche et d'une région de bord d'une seconde couche de retouche à une transparence prédéfinie, dans lequel la région de bord est une région dans une couche de retouche autre qu'une région correspondant à un objet de retouche ; et
superposer respectivement la première couche de retouche et la seconde couche de retouche sur l'image d'origine pour générer l'image cible ;
dans lequel, avant de définir la transparence de la région de bord de la première couche de retouche et de la région de bord de la seconde couche de retouche sur la transparence prédéfinie, l'unité de traitement (104) est **caractérisée en ce qu'**elle est configurée pour :
déterminer si la première couche de retouche et la seconde couche de retouche comprennent une région réduite, dans lequel la région réduite est une région qui change de la région correspondant à l'objet de retouche à la région de bord après retouche ; et
en réponse à la première couche de retouche et à la seconde couche de retouche comprenant la région réduite, effectuer un remplissage de transition de bord sur la région réduite et définir la région réduite sur la région correspondant à l'objet de retouche.

9. Dispositif électronique comprenant une mémoire (111) et un processeur (112), dans lequel la mémoire (111) est configurée pour stocker un programme informatique ; et le processeur (112) est configuré pour, lors de l'exécution du programme informatique, amener le dispositif électronique à mettre en œuvre un procédé de retouche d'image, dans lequel
le procédé de retouche d'image comprend :
l'obtention d'une image d'origine, dans lequel l'image d'origine comprend un premier objet de retouche et un second objet de retouche, et le premier objet de retouche et le second objet de retouche se trouvent dans des régions d'image différentes de l'image d'origine ;
le rendu du premier objet de retouche et du second objet de retouche sur des couches différentes, respectivement, pour générer une première couche d'origine correspondant au premier objet de retouche et une seconde couche d'origine correspondant au second objet de retouche ;
le rendu d'un résultat de retouche du premier objet de retouche lors d'une première opération de retouche basée sur la première couche d'origine afin de générer une première couche de retouche correspondant au premier objet de retouche en réponse à la première opération de retouche pour le premier objet de retouche, et le rendu d'un résultat de retouche du second objet de retouche lors d'une seconde opération de retouche basée sur la seconde couche d'origine afin de générer une seconde couche de retouche correspondant au second objet de retouche en réponse à la seconde opération de retouche pour le second objet de retouche ; et
la génération, sur la base de la première couche de retouche et de la seconde couche de retouche, d'une image cible comme résultat de retouche de l'image d'origine ;
dans lequel la génération, sur la base de la première couche de retouche et la seconde couche de retouche, d'une image cible comprend :
la définition d'une transparence d'une région de bord de la première couche de retouche et d'une région de bord d'une seconde couche de retouche à une transparence prédéfinie, dans lequel la région de bord est une région dans une couche de retouche autre qu'une région correspondant à un objet de retouche ; et
la superposition de la première couche de retouche et de la seconde couche de retouche, respectivement, sur l'image d'origine pour générer l'image cible ;
dans lequel, avant de définir une transparence d'une région de bord de la première couche de retouche et d'une région de bord de la seconde couche de retouche à une transparence prédéfinie, le procédé est **caractérisé en ce qu'**il comprend en outre :
la détermination si la première couche de retouche et la seconde couche de retouche comprennent une région réduite, dans lequel la région réduite est une région qui change de la région correspondant à l'objet de retouche à la région de bord après retouche ; et
en réponse à la première couche de retouche et à la seconde couche de retouche comprenant la région réduite, la réalisation d'un remplissage de transition de bord sur la région réduite et la définition de la région réduite sur la région correspondant à l'objet de retouche.

10. Support de stockage lisible par ordinateur stockant un programme informatique, dans lequel le programme informatique, lorsqu'il est exécuté par un dispositif informatique, amène le dispositif informatique à mettre en œuvre le procédé selon l'une quelconque des revendications 1 à 7.

11. Produit de programme informatique, dans lequel le programme informatique, lorsqu'il est exécuté sur un ordinateur, amène l'ordinateur à mettre en œuvre le procédé de retouche d'image selon l'une quelconque des revendications 1 à 7.
